# EUROPEAN PATENT SPECIFICATION

(11) **EP 1 099 128 B1**
(45) Date of publication and mention of the grant of the patent: **18.02.2004**
(21) Application number: 99931385.1
(22) Date of filing: 07.07.1999
(51) Int. Cl.: G02B 5/10, F24J 2/10, F24J 2/08

(54) **RADIANT ENERGY CONCENTRATOR**
KONZENTRATOR FÜR STRAHLUNGSENERGIE
CONCENTRATEUR D'ENERGIE RADIANTE

(30) Priority: 21.07.1998 GE 316798; 06.11.1998 WO PCT/GE98/00005; 16.06.1999 GE 352699
(43) Date of publication of application: 16.05.2001
(73) Proprietor: Moseshvili, Aleksandre S., Tbilisi, 380086 (GE); Tsintsadze, Levan, Tbilisi 380002 (GE)
(72) Inventor: Mosehvili, Aleksandre S., Tbilisi 380086 (GE)
(74) Representative: Wagner, Carsten
(86) International application number: PCT/GE1999/000006
(87) International publication number: WO 2000/005604

(56) References cited:
- GB-A- 2 009 391
- US-A- 3 985 116
- US-A- 4 030 477
- US-A- 4 079 724
- US-A- 4 090 495
- US-A- 4 529 830

## Description

This invention pertains to: solar-energy technology and more specifically to the field of light radiation energy concentrators and can be used as conversion means of radiant energy into thermal or electrical energy; astronomy, wherein it can be used in designing the powerful telescopes, intended for collecting the weak light beams coming from the distant galaxies; and high energy physics where it can be utilized for obtaining strong laser beams.

Considered to be relevant to the present invention are diverse types of funnel-shaped concentrators, in particular, truncated pyramid-shaped concentrator [Andreev V.M., Grilikhes V.A. rumiancev V.D. Photo-electricheskoe preobrazovanie koncentrirovannogo solnechnogo izluchenia. Leningrad ''NAUKA" 1989 pp. 206-213 (Rus)], and so-called paraboloidal focon [Andreev V.M., Grilikhes V.A. rumiancev V.D. Photo-electricheskoe preobrazovanie koncentrirovannogo solnechnogo izluchenia. Leningrad "NAUKA" 1989 pp. 220-222 (Rus)]. The truncated pyramid - shaped concentrator is a pyramid having truncated top portion, thin walls, and internal reflecting surface, whose wide portion being directed to the light source. The disadvantage of the truncated pyramid-shaped concentrator is low concentrating capability, big dimensions and the fact that it comprises the solar cells not protected from the cosmic radiation. The walls of the paraboloidal focon are paraboloid-shaped and its disadvantage is similar to that of the truncated pyramid-shaped concentrator.

The most relevant subject to the present invention is considered a paraboloidal-hyperboloidal concentrator [Andreev V.M., Grilikhes V.A. rumiancev V.D. Photo-electricheskoe preobrazovanie koncentrirovannogo solnechnogo izluchenia. Leningrad "NAUKA" 1989 pp. 278-300 (Rus)]. The paraboloidal-hyperboloical concentrator comprises a combination of one primary paraboloidal mirror and one secondary hyperboloidal mirror. The disadvantage of the paraboloidal-hyperboloical concentrator is that it cannot be operated unless precise taking aim at the source of beams. The radius of the secondary mirror determines the protection ability of a solar cell against damaging cosmic radiation which on the other hand causes the reduction of the primary mirror's operating area; The height of the concentrator depends on the area which is held by the paraboloidal mirror.

Technical result of the present invention is the reduction of mass and overal dimensions of the concentrator; lack of the necessity of taking a precize aim at the source of a light beams; and the maximum protection of the solar cells against the damaging cosmic radiation.

The device of the present invention includes: funnel-shaped concentrators; collecting lenses, and the concentrators comprising paraboloidal-hyperboloidal reflectors.

The essence of the present invention which allows to avoid the disadvantages of the above described later concentrator and permitting to achieve the technical result lies in that the reflectors of the layers arranged under the beams receiving layer provide collection at the center of the beams coming out of the peripheral outlets available on the preceding layer, thereby allowing to achieve high level of concentration and significant decrease in overall dimensions of the entire construction. In case of combined construction of the paraboloidal-hyperboloidal concentrators of the receiving layer decrease in the radius of the secondary mirror becomes possible and consequently maximum utilization of the radiant energy. In case of utilizing the suggested concentrator for the purposes of photoelectric transformation the solar cells get maximum protection against the damaging cosmic radiation as they are arranged under the layers.

The present invention can be described referring to the following figures:
FIG.1 being a top view of the concentrator provided with funnel-shaped members arranged in a hexagonal honeycomb manner;
FIG.2 being a sectional view of the concentrator provided with funnel-shaped members arranged in a hexagonal honeycomb manner;
FIG.3 showing the combination of the layer provided with funnel-shaped members and reflectors, and functional connections between them;
FIG.4 being a top view of the concentrator comprising orthogonally arranged lenses and funnel-shaped members;
FIG.5 being a sectional view of the concentrator comprising orthogonally arranged lenses and funnel-shaped members;
FIG.6 showing one embodiment of the concentrator comprising funnel-shaped collecting members and Fresnel lenses not necessarily required to be aimed at the source of beams;
FIG.7 showing the same concentrator provided with conventional optical lenses;
FIG.8 showing an embodiment of the concentrator provided with conventional optical lenses necessary to be precisely aimed at the source of beams;
FIG.9 being a sectional view of the concentrator comprising paraboloidal-hyperboloidal reflectors.
FIG.10 showing a sectional view of the concentrator comprising paraboloidal-hyperboloidal reflectors based on parallel beams transmission principle.

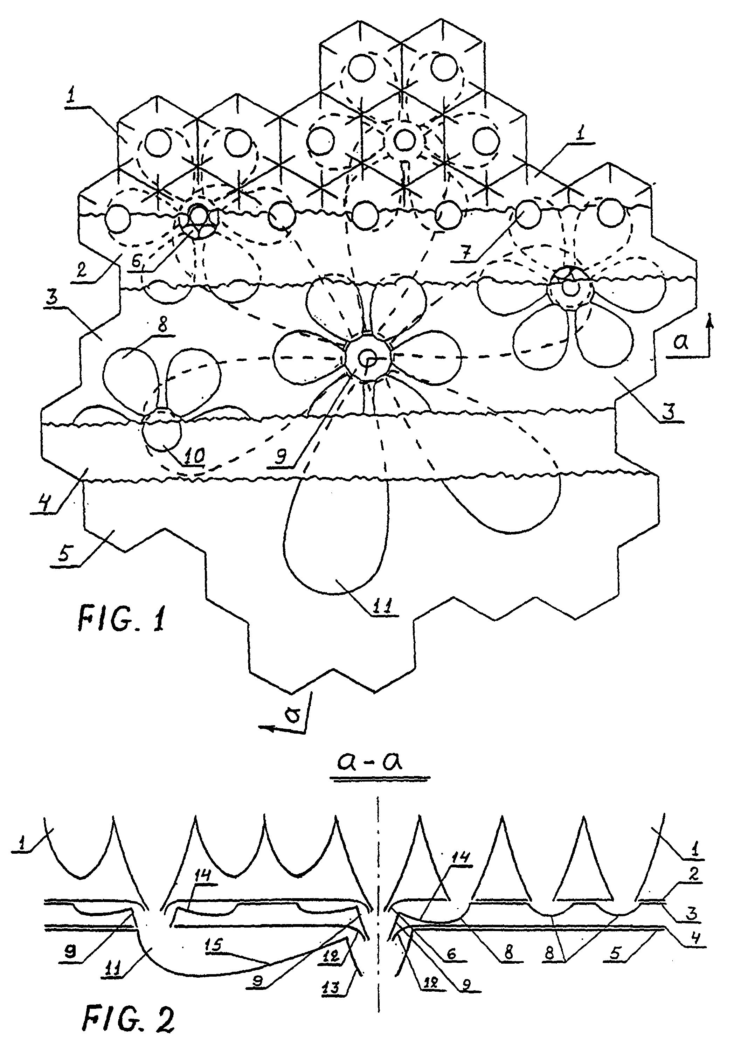

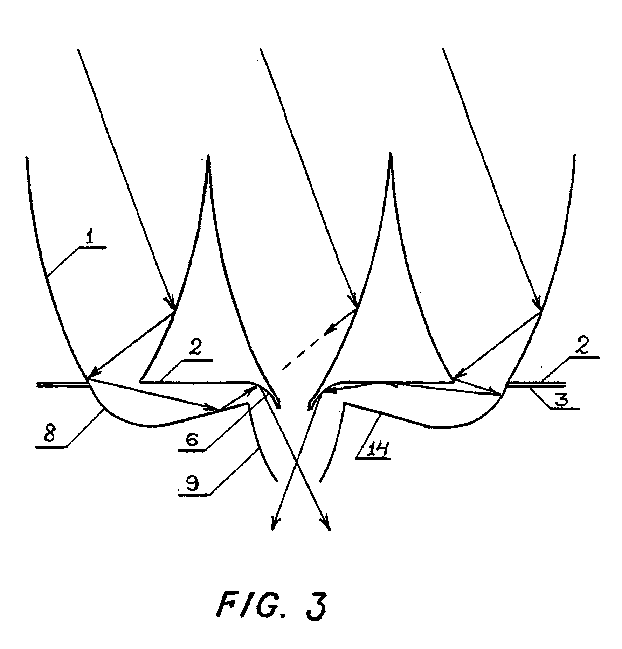

The concentrator which can be seen on figures 1-3, having in hexagonal honeycomb manner arranged funnel-shaped members, comprises: a receiving layer 1 composed of the set of funnel-shaped members; first and second layers arranged under the receiving layer each having one upper and one lower plates; upper plate 2 of the first layer, having a reflective rear surface and holes 7 and intermediate reflectors 6; lower plate 3 of the first layer, having peripheral reflectors 8, canals 14 provided with reflective surfaces, and disposed at the connection point of said canals a funnel 9 with internal reflective surface; upper plate 4 of the second layer, with reflective rear surface, having holes 10 and intermediate reflectors 12; and a lower plate 5 of the second layer having peripheral reflectors 11, canals 15 provided with reflective surfaces, and disposed at said canals connecting point a funnel 13 with an internal reflective surface. The outline of the concentrator is followed by the number of the layers and each particular outline is compatible with the same outline.

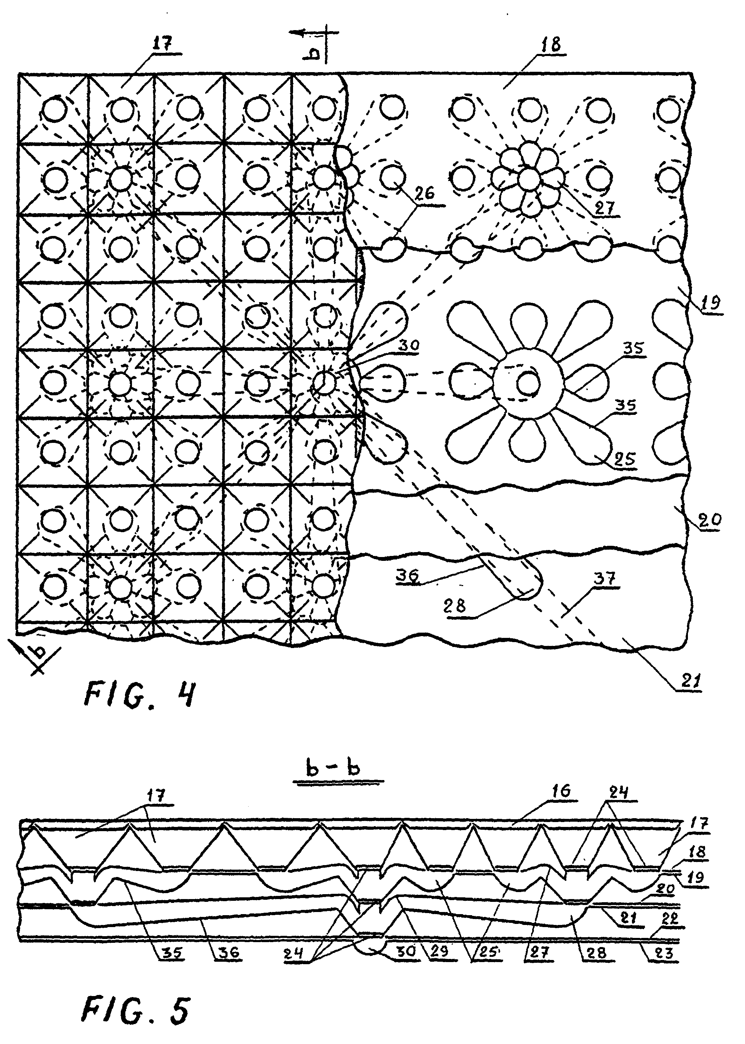

The concentrator which can be seen on figures 4-7, having orthogonally arranged funnel-shaped members, comprises: a set of square-shaped collecting lenses 16, orthogonally arranged funnel-shaped members 17; a first, second and third layers provided under the receiving layer each having one upper and one lower plates; upper plate 18 of the first layer, provided with intermediate reflectors 27 and holes 26, and having reflective rear surface; lower plate 19 of the first layer, having peripheral reflectors 25 and canals 35 with reflective surfaces; upper plate 20 of the second layer with reflective rear surface, having intermediate reflectors 29 and holes; lower plate 21 of the second layer, having peripheral reflectors 28 and canals 36 with reflective surfaces 36; upper plate 22 of the third layer with reflective rear surface having intermediate reflectors and holes; lower plate 23 of the third layer, having peripheral reflectors 30 and canals provided with reflective surfaces; and collecting members outlet lenses 24; wherein the holes 26 on the plate 18 are in coincidence with the outlets of the peripheral funnels, the intermediate reflectors 27 are arranged about central collecting member's outlet of the receiving layer, the peripheral reflectors 25 on the plate 19 are in coincidence with the holes 26 in the plate 18, the peripheral reflectors 25 on the plate 19 are connected with the intermediate reflectors 27 on the plate 18, by means of the reflective surface containing canals 35, the reflectors 28 on the plate 21 are connected with the intermediate reflectors 29 on the plate 20, by means of the reflective surface containing canals 36, the peripheral reflector 30 on the plate 23 is in coincidence with the hole in the plate 22.

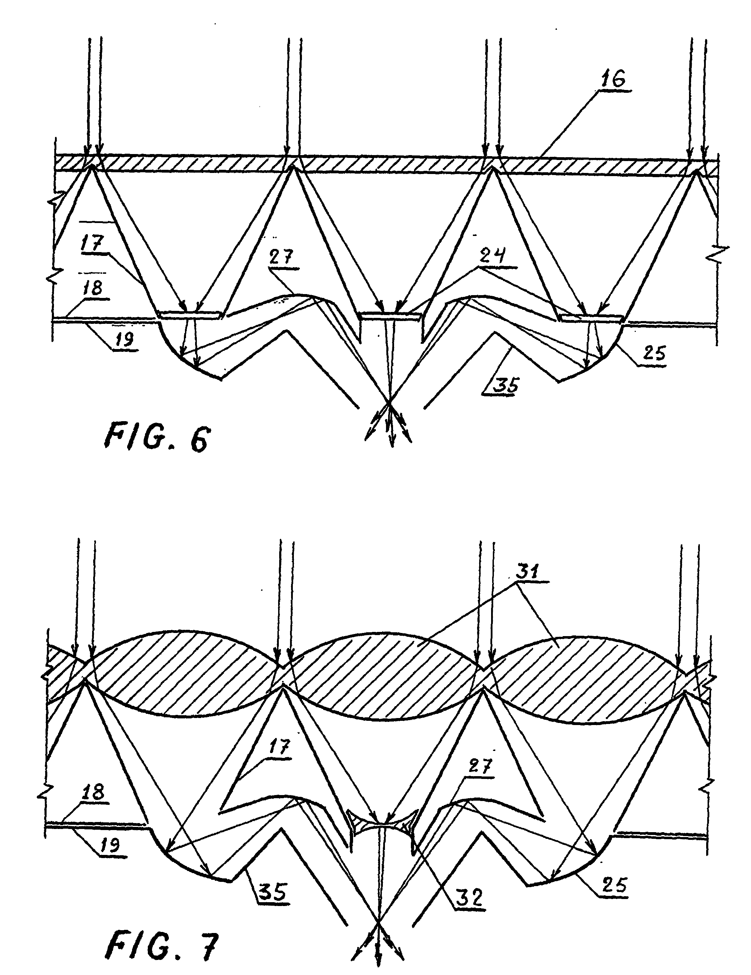

In an embodiment of the concentrator shown on the figures 5 and 6 the Fresnel lenses are used. In this embodiment, non-precise aiming at the source of light is provided for. The Fresnel lenses arranged at the outlets of the collecting members 17 permit choosing of divergence of the beams coming from the focus. Top edges of the collecting members 17 are square-shaped and they are becoming round towards the direction of the outlet. Reflective surface containing canals 35 play an auxiliary role in case of non-precise aiming while inclining the focus from the geometrical center of the outlet.

On the fig.7 it can be seen an embodiment of the present invention where the conventional lenses are used as inlet lenses 31 and outlet lenses 32. There are no lenses at the outlet of the peripheral members.

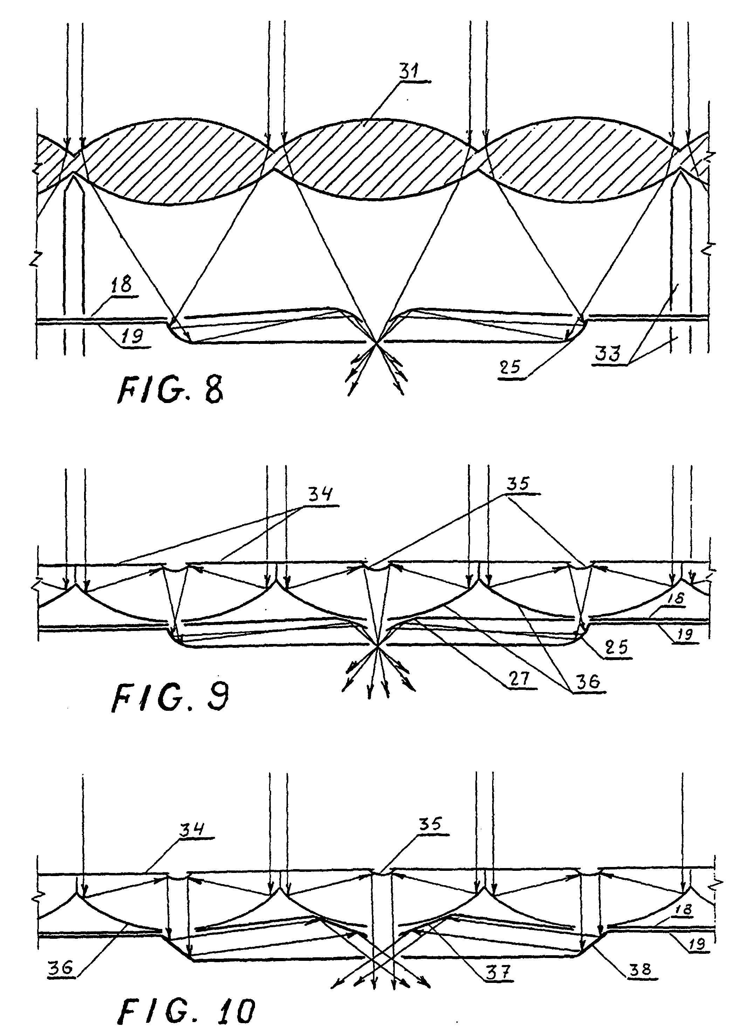

In an embodiment shown on the fig 8 there is no funnel-shaped members and precise aiming at the source of beams is provided such that the focus is located in the zone of the hole of the layer which is opposite the lens. The plurality of lenses are rested upon the supports 33.

On the fig 9 it can be seen an alternative embodiment of the light beams concentrator comprising paraboloidal and hyperboloidal reflectors. In this embodiment, the paraboloidal and hyperboloidal reflectors are facing one another with their operating surfaces, the hyperboloidal reflectors being in engagement by holders 34.

The reflectors containing layer which is located under the receiving layer comprises paraboloidal reflectors 25 and 27.

On the fig. 10 it can be seen a concentrator provided with receiving layer and composed of a set of paraboloidal-hyperboloidal concentrators. The concentrator is capable of transmitting parallel beams. A reflector containing layer disposed under the receiving layer comprises flat reflectors 37 and 38.

In the case of hexagonal honeycomb arrangement of the receiving layer the upper edges of the funnel-shaped members are hexagonal, narrowing at the outlet end and gradually taking round shape. The funnel-shaped members are grouped such that six peripheral members are arranged about a central member of each seven member. Layers are provided under the receiving layer, which layers are provided with reflectors and canals with reflective surfaces thereon. Each layer is composed of one upper plate and one lower plate. The upper plate has reflective surface from underneath and is provided with holes and intermediate reflectors. The lower plate comprises peripheral reflectors and canals with reflective surfaces thereon. The holes of the upper plate are in coincidence with the outlets of the peripheral funnel-shaped members of the receiving layer, and the intermediate reflectors of the upper plate are arranged around the outlet of each central member of the receiving layer. The peripheral reflectors of the lower plate are in coincidence with the holes in upper plate, and the reflective surface containing canals connect the reflectors of the lower plate to the intermediate reflectors of the upper plate. Jointly with the upper and lower plates, the canals play a role of funnel-shaped collecting members. Axes of each six adjacent canals make 60° angle with one another and create a six-pointed star. An outlet funnel with reflective internal surface is provided at the canals connecting point, i.e. in the center of the six-pointed star. The beams coming out of the peripheral members of the receiving layers by means of the peripheral reflectors are transmitted to the intermediate reflectors via the reflective surface containing canals. The intermediate reflectors direct the received beams towards the funnel with internal reflective surface, which is disposed at the center of the six-pointed star. Each layer comprises the similar plates, and on each following layer, the distance from the center of the six-pointed star to the geometrical center of the hole coinciding the peripheral reflector of the six-pointed star exceeds with √7 times that on the preceding layer. An outlet funnel of the central six-pointed star in the group of stars arranged on each preceding layer is in coincidence with the center of the six-pointed star on each following layer, and the outlet funnels of six peripheral six-pointed stars in the group of stars arranged on the preceding layer are in coincidence with the peripheral reflectors.

In case of orthogonal arrangement of the receiving layer of the concentrator, an orthogonal matrix is created by the upper portions of the collecting members of both lenses containing and the paraboloidal-hyperboloidal reflectors containing concentrators.

The receiving layer members are grouped in such a manner, that eight adjacent squares are arranged around the central member. Reflectors containing layers are disposed under the beams receiving layer, each layer being composed of two plates. The lower plate of the layer comprises peripheral reflectors arranged along the axes of symmetry of the squares, and the upper plate comprises holes and intermediate reflectors arranged on a circle around the centre of a group. Distance from each following layer's group centre to the geometrical centre of the outlets coinciding the peripheral reflectors is three times more than that on the preceding layer.

The radiant energy concentrator operates in the following manner: the light beams incident upon the beams receiving layer are transmitted from the collecting members outlets to the lower layer's reflectors. The beams incident upon the peripheral reflectors from the receiving layer's peripheral members are reflected towards the intermediate reflectors. The beams directed to the centre by the intermediate reflectors are joined to the beam converged by the central member of the receiving layer. In the similar manner are collected also the beams coming out of each layer.

Not taking into account the loses, each layer having a hexagonal honeycomb structure, can perform seven-fold collection, and in case of orthogonal structuring it can make nine-fold collection.

Adding each layer, in case of hexagonal honeycomb structure, allows √7 times reduction in height remaining the original area of the construction; and 3 times reduction in height can be obtained in case of orthogonal arrangement.

The concentrated sunbeam can be transmitted to the unlit places by the sun by means of the internal reflective-surfaced containing tube and using its revertion process the beam can be expanded so as to decrease in expenduture of electrical energy during the daytime and improve the sanitary conditions of the places.

## Claims

1. Radiant energy concentrator which comprises a light beam receiving layer in the form of a set of beam collecting members arranged on a common level, **characterized in that** further layers are provided under and parallel to said receiving layer, each further layer being provided with reflectors, said collecting members of said receiving layer are grouped such that each group has a central member and, located adjacent to one another, peripheral members arranged about said central member each collecting member having a downardly directed outlet, said reflectors of the further layer provided under said receiving layer are arranged such that the beams coming out of the outlets of said peripheral collecting members above said further layer are directed to intermediate reflectors positioned between said receiving layer and said further layer and arranged cirrcumferencially around the centre of the group, said intermediate reflectors directing the received beams to an outlet whose axis is coincident with the axis of said group centre, the outlets in each further layer are grouped in a similar manner to those of said receiving layer and the peripheral reflectors of each following futher layer direct the beams coming out of the peripheral outlets of the preceding layer to respective intermediate reflectors positioned between two neighbouring layers which direct the received beams to the outlets coincident with the axis of the group centre, and the distance between a group centre and group periphery in each following layer exceed that in each preceding layer.

2. A concentrator according to the claim 1, wherein said receiving layer is made in the form of a set of funnel-shaped members arranged in a hexagonal honeycomb manner and having beams reflecting working surfaces, and six peripheral reflectors (8) from the group of reflectors arranged under the said receiving layer are connected with the intermediate reflectors (2) arranged about the centre of the group by means of the canals having reflective surfaces and make six-pointed stars.

3. A concentrator according to the claim 1, wherein said light beams receiving layer is made as combination of orthogonally arranged paraboloidal-hyperboloidal concentrators.

4. A concentrator according to the claim 1, wherein said light beams receiving layer is made in the form of a set of orthogonally arranged collecting lenses (16).

5. A concentrator according to the claim 1, wherein said light beams receiving layer is made in the form of orthogonally arranged light collecting funnel-shaped members, above said funnel-shaped members square-shaped collecting lenses (16) are provided, the optical axis of each of said lenses matching that of said funnel-shaped members, and the peripheral reflectors (25) being provided on the layers which are arranged under said light receiving layer are connected with respective intermediate reflectors (27) by means of the canals having reflective surfaces, the canals jointly making eight-pointed stars and a lens is in coincidence with each central member outlet and each layer central outlet.

6. A concentrator according to the claim 5, wherein lenses are in coincidence with outlets of light beams receiving layers peripheral members and with peripheral outlets of each layer.

7. A concentrator according to the claims 4 to 6, wherein said lenses are the Fresnel lenses.

## Patentansprüche

1. Konzentrator für Strahlungsenergie, mit einer Lichtstrahlaufnahmeschicht in Form einer Gruppe aus Strahlsammelelementen, die auf gleichem Niveau angeordnet sind, **dadurch gekennzeichnet, daß** weitere Schichten unterhalb und parallel zu der Aufnahmeschicht angeordnet sind, wobei jede weitere Schicht mit Reflektoren versehen ist, wobei die Sammelelemente der Aufnahmeschicht derart gruppiert sind, daß jede Gruppe ein Zentralelement und, benachbart zueinander periphere Elemente aufweist, die um das Zentralelement herum angeordnet sind, wobei jedes Sammelelement einen abwärts gerichteten Ausgang aufweist, wobei die Reflektoren der weiteren Schicht, die unterhalb der Aufnahmeschicht angeordnet ist, derart angeordnet sind, daß aus den Ausgängen der peripher angeordneten Sammelelemente oberhalb der weiteren Schicht austretende Strahlen zu Zwischenreflektoren gerichtet werden, die zwischen der Aufnahmeschicht und der weiteren Schicht angeordnet sind und in Umfangsrichtung um das Zentrum der Gruppe herum angeordnet sind, wobei die Zwischenreflektoren die empfangenen Strahlen zu einem Ausgang lenken, dessen Achse mit der Achse des Gruppenzentrums zusammenfällt, wobei die Ausgänge jeder weiteren Schicht zu denjenigen der Aufnahmeschicht ähnlich gruppiert sind und die peripheren Reflektoren von jeder folgenden weiteren Schicht die aus den peripheren Ausgängen austretenden Strahlen von der vorherigen Schicht zu den jeweiligen Zwischenreflektoren lenken, die zwischen zwei benachbarten Schichten angeordnet sind, welche die empfangenen Strahlen zu den Ausgängen lenken, die mit der Achse des Gruppenzentrums zusammenfallen, und wobei der Abstand zwischen einem Gruppenzentrum und der Gruppenperipherie in jeder folgenden Schicht den der vorherigen Schicht übersteigt.

2. Konzentrator nach Anspruch 1, wobei die Aufnahmeschicht in Form einer Gruppe aus trichterförmigen Elementen gebildet ist, die in hexagonaler Wabenstruktur angeordnet sind und strahlenreflektierende Oberflächen aufweisen, und sechs periphere Reflektoren (8) aus der Reflektorgruppe, die unterhalb der Aufnahmeschicht angeordnet sind, mit den Zwischenreflektoren (2), die um das Zentrum der Gruppe herum angeordnet sind, durch Kanäle mit reflektierenden Oberflächen verbunden sind und Sterne mit sechs Spitzen abbilden.

3. Konzentrator nach Anspruch 1, wobei die Lichtstrahlaufnahmeschicht aus einer Kombination von orthogonal angeordneten paraboloidisch-hyperboloidischen Konzentratoren gebildet ist.

4. Konzentrator nach Anspruch 1, wobei die Lichtstrahlaufnahmeschicht in Form einer Gruppe aus orthogonal angeordneten Sammellinsen (16) gebildet ist.

5. Konzentrator nach Anspruch 1, wobei die Lichtstrahlaufnahmeschicht aus orthogonal angeordneten, lichtsammelnden trichterförmigen Elementen gebildet ist, wobei oberhalb der trichterförmig ausgebildeten Elemente quadratisch geformte Sammellinsen (16) vorgesehen sind, wobei die optische Achse jeder der Linsen zu der der trichterförmigen Elemente paßt, und die peripheren Reflektoren (25), die auf den Schichten vorgesehen sind, die unterhalb der Lichtstrahlaufnahmeschicht angeordnet sind, mit jeweiligen Zwischenreflektoren (27) durch Kanäle mit reflektierenden Oberflächen verbunden sind, wobei die Kanäle gemeinsam Sterne mit acht Spitzen abbilden und eine Linse in Koinzidenz mit jedem Zentralelementausgang und jedem Schichtzentralausgang ist.

6. Konzentrator nach Anspruch 5, wobei Linsen mit Ausgängen der Lichtstrahlaufnahmeschichten peripherer Elemente und mit peripheren Ausgängen jeder Schicht koinzident sind.

7. Konzentrator nach einem der Ansprüche 4 bis 6, wobei die Linsen Fresnel-Linsen sind.

## Revendications

1. Concentrateur d'énergie radiante qui comprend une couche de réception de faisceaux lumineux sous la forme d'un ensemble d'éléments de collecte de faisceaux agencés sur un niveau commun, **caractérisé en ce que** des couches supplémentaires sont prévues sous ladite couche de réception et parallèlement à celle-ci, chaque couche supplémentaire étant pourvue de réflecteurs, lesdits éléments de collecte de ladite couche de réception étant groupés de telle sorte que chaque groupe comporte un élément central et, situés adjacents les uns aux autres, des éléments périphériques agencés autour dudit élément central, chaque élément de collecte comportant un orifice de sortie dirigé vers le bas, lesdits réflecteurs de la couche supplémentaire prévue sous ladite couche de réception étant agencés de telle sorte que les faisceaux sortant des orifices de sortie desdits éléments de collecte périphériques au-dessus de ladite couche supplémentaire sont dirigés vers des réflecteurs intermédiaires positionnés entre ladite couche de réception et ladite couche supplémentaire et agencés de manière circonférentielle autour du centre du groupe, lesdits réflecteurs intermédiaires dirigeant les faisceaux reçus vers un orifice de sortie dont l'axe coïncide avec l'axe dudit centre du groupe, les orifices de sortie de chaque couche supplémentaire étant groupés d'une manière similaire à ceux de ladite couche de réception et les réflecteurs périphériques de chaque couche supplémentaire suivante dirigeant les faisceaux sortant des orifices de sortie périphériques de la couche précédente vers des réflecteurs intermédiaires respectifs positionnés entre deux couches voisines qui dirigent les faisceaux reçus vers les orifices de sortie qui coïncident avec l'axe du centre du groupe, et la distance entre un centre de groupe et une périphérie de groupe dans chaque couche suivante est supérieure à celle dans chaque couche précédente.

2. Concentrateur selon la revendication 1, dans lequel ladite couche de réception est réalisée sous la forme d'un ensemble d'éléments en forme d'entonnoir agencé en nid d'abeilles hexagonal et comportant des surfaces de travail réfléchissant les faisceaux, et six réflecteurs périphériques (8) du groupe de réflecteurs agencés sous ladite couche de réception sont reliés aux réflecteurs intermédiaires (2) agencés autour du centre du groupe au moyen des canaux comportant des surfaces réfléchissantes et forment des étoiles à six branches.

3. Concentrateur selon la revendication 1, dans lequel ladite couche de réception des faisceaux lumineux est réalisée comme une combinaison de concentrateurs paraboliques-hyperboliques agencés de manière orthogonale.

4. Concentrateur selon la revendication 1, dans lequel ladite couche de réception des faisceaux lumineux est réalisée sous la forme d'un ensemble de lentilles collectrices (16) agencées de manière orthogonale.

5. Concentrateur selon la revendication 1, dans lequel ladite couche de réception des faisceaux lumineux est réalisée sous la forme d'éléments en forme d'entonnoir de collecte de lumière agencés de manière orthogonale, des lentilles collectrices carrées (16) étant prévues au-dessus desdits éléments en forme d'entonnoir ; l'axe optique de chacune desdites lentilles correspondant à celui desdits éléments en forme d'entonnoir, et les réflecteurs périphériques (25) qui sont prévus sur les couches qui sont agencées sous ladite couche de réception de lumière sont reliés à des réflecteurs intermédiaires (27) respectifs au moyen des canaux comportant des surfaces réfléchissantes, les canaux réalisant conjointement des étoiles à huit branches et une lentille coïncidant avec chaque orifice de sortie d'élément central et chaque orifice de sortie central de couche.

6. Concentrateur selon la revendication 5, dans lequel des lentilles coïncident avec des orifices de sortie d'éléments périphériques de couches de réception de faisceaux lumineux et avec des orifices de sortie périphériques de chaque couche.

7. Concentrateur selon les revendications 4 à 6, dans lequel lesdites lentilles sont des lentilles de Fresnel.
